# EUROPÄISCHE PATENTANMELDUNG

(11) **EP 2 177 402 A1**
(43) Veröffentlichungstag der Anmeldung: **21.04.2010**
(21) Anmeldenummer: 09012916.4
(22) Anmeldetag: 13.10.2009
(51) Int. Cl.: B60R 21/01, B60R 21/00, B60R 21/04

(54) **Verfahren zur Detektion von Verformungen an einem Fahrzeugbauteil und passendes Kraftfahrzeug**

(30) Priorität: 17.10.2008 DE 102008051794
(71) Anmelder: Benteler Automobiltechnik GmbH, 33104 Paderborn (DE)
(72) Erfinder: Andres, Thorsten, 33106 Paderborn (DE); Richter, Björn, 33106 Paderborn (DE)
(74) Vertreter: Ksoll, Peter

(57) **Zusammenfassung**

Die Erfindung betrifft ein Kraftfahrzeug (15) und ein Verfahren zur Detektion von Verformungen eines Fahrzeugbauteils (3), mit welchem eindeutige Aussagen bezüglich des Ortes und des zeitlichen Fortschritts der Verformung sowie der Schwere der Verformung innerhalb eines sehr kurzen Zeitbereichs nach Beginn der Verformung des Fahrzeugbauteils (3) getroffen werden können.

## Beschreibung

Die Erfindung betrifft ein Kraftfahrzeug sowie ein Verfahren zur Detektion von Verformungen von Fahrzeugbauteilen.

Die Detektion eines Unfalls ist von Kraftfahrzeugen von elementarer Wichtigkeit hinsichtlich des Insassenschutzes, um relevante Sicherheitsmaßnahmen, wie beispielsweise das Auslösen eines Airbags, einzuleiten.

Stand der Technik zur Detektion von Fahrzeugunfällen ist die Verwendung von Beschleunigungssensoren, wie sie beispielsweise in der DE 10 2004 029 816 A1 beschrieben werden. Der Beschleunigungsensor reagiert dabei rein mechanisch auf Verzögerungen eines Fahrzeugs, wodurch beispielsweise eine seismische Masse des Sensors ausgelenkt wird. Dabei entsteht zwischen beweglichen und den starren Stegen des Sensors eine Änderung der elektrischen Eigenschaften, was einen Maßstab für die Größe der Beschleunigung/Verzögerung darstellt.

Der Nachteil bei der Verwendung zentraler Beschleunigungssensoren ist, dass beispielsweise im Falle eines Frontalaufpralls sich die Beschleunigungskraft für eine niedrige Geschwindigkeit und eine hohe Geschwindigkeit beim Unfall in den ersten 20 bis 30 ms nur unwesentlich unterscheiden. Erst bei Zeiten größer als 30 ms treten wesentliche Unterschiede auf. Dies liegt daran, dass die Energie des Aufpralls zu Beginn des Unfalls durch die weiche Grundstruktur der Crashbox abgebaut wird. Während dieser Zeit erfährt die restliche Karosserie kaum eine Beschleunigung/Verzögerung, außerdem lässt sich der Ort des Aufpralls nur sehr ungenau bestimmen, ebenso wie die Intensität des Unfalls.

Eine weitere Methode zur Detektion eines Unfalls ist die Auswertung des Körperschalls, wie es in der DE 10 2005 046 928 A1 beschrieben wird. Dieses Verfahren wird auch als Crash-Impact-Sound-Sensing (CISS) bezeichnet. Bei der Verformung von Strukturbauteilen eines Kraftfahrzeugs entstehen auf Grund der auftretenden Spannungen Mikrorisse in den Bauteilen, mit welchen die Emission von Körperschallwellen verknüpft ist. Durch die digitale Auswertung des Körperschallsignals lassen sich dann Verformungen der Fahrzeugkarosserie durch einen Unfall nachweisen. Es ist jedoch schwierig, den Ursprung des Aufpralls bzw. der Verformung zu selektieren, da der Ursprung des Körperschalls ebenfalls unbekannt ist. Zusätzlich muss ein charakteristisches Signal vorhanden sein, um den Unfall bzw. die Verformung der Fahrzeugkarosserie eindeutig von sonstigen Geräuschen zu unterscheiden. Dies erfordert, dass das Signal vom Rauschen getrennt wird, wofür eine entsprechend hohe Rechenleistung sowie eine Rechenzeit von etwa 15 ms benötigt wird.

Die Aufgabe der vorliegenden Erfindung besteht darin, ein Verfahren aufzuzeigen, mit welchem eindeutige Aussagen bezüglich der Position der Verformung eines Fahrzeugbauteils und des zeitlichen Fortschritts der Verformung gemacht werden können und mit welchem die Schwere des Unfalls besser bestimmt werden kann. Die Auswertung soll ohne größeren Rechenaufwand in einem sehr kurzen Zeitbereich insbesondere < 10 ms nach dem Crashbeginn erfolgen.

Des Weiteren wird ein Kraftfahrzeug mit einer Vorrichtung zur Detektion von Verformungen von Fahrzeugbauteilen, insbesondere Karosseriebauteilen aufgezeigt werden.

Das Verfahren mit den Maßnahmen des Patentanspruchs 1 löst den verfahrensmäßigen Teil der Aufgabe. Die Lösung des gegenständlichen Teils der Aufgabe besteht in einem Kraftfahrzeug gemäß den Merkmalen von Patentanspruch 7.

Weitere erfindungsgemäße Maßnahmen des Verfahrens sind Gegenstand der Unteransprüche 2 bis 6.

Weiterbildungen des erfindungsgemäßen Kraftfahrzeugs sind Gegenstand der Unteransprüche 8 bis 16.

Das erfindungsgemäße Verfahren basiert auf dem Zusammenspiel einer Auswerteeinheit mit einer oder mehreren Sensoreinheiten. Die Sensoreinheit umfasst ein an einem Fahrzeugbauteil, beispielsweise der Karosserie angeordnetes Blendenbauteil, welches bei einer Verformung der Fahrzeugkarosserie in diesem Bereich relativ zu einer Emitter- und Detektoreinheit verschoben wird. Die Strahlengänge der von der Emittereinheit zur Detektoreinheit verlaufenden Lichtstrahlen werden bei einer Verschiebung des Blendenbauteils unterbrochen. Die Detektoreinheit detektiert die Beleuchtungsstärke der auftreffenden Lichtstrahlen und sendet diese in Form eines Signals, beispielsweise eines Lichtsignals, an die Auswerteeinheit, welche die von einem oder mehreren derartiger Sensoreinheiten empfangenen Signale auswertet.

Im Sinne der vorliegenden Erfindung bezeichnet der Strahlengang den Weg, auf dem sich ein von der Emittereinheit ausgesandter Lichtstrahl zu einer Detektoreinheit bewegt.

Die Emittereinheit kann aus einzelnen Emittern, beispielsweise Dioden, bestehen, wobei jede Diode einen Lichtstrahl aussendet. Ebenso ist es möglich, den Lichtemitter mit nur einer Lichtquelle zu versehen, deren Lichtstrahl durch eine Lochblende in mehrere Lichtstrahlen unterteilt wird.

Die zentrale Detektoreinheit kann beispielsweise aus Optokopplern oder einzelnen Detektoren bestehen oder aus einem entsprechend großen Detektor, beispielsweise in Form eines Charge-Coupled-Device-Sensors (CCD-Sensor) ausgeführt sein.

Bei einer Verformung des Fahrzeugbauteils, an welchem das Blendenbauteil angeordnet ist, verschiebt sich dieses Blendenbauteil relativ zur Emitter- und Detektoreinheit und unterbricht die einzelnen Strahlengänge nacheinander. Durch diese Unterbrechung trifft weniger Licht auf die Detektoreinheit, wodurch ebenfalls die detektierte Beleuchtungsstärke verringert wird.

Ebenso ist es denkbar, dass durch eine Verformung der Fahrzeugkarosserie im Bereich des Blendenbauteils durch eine entsprechende Ausgestaltung des Blendenbauteils die Lichtstrahlen freigegeben werden, so dass die von der Detektoreinheit detektierte Beleuchtungsstärke mit zunehmender Verformung zunimmt.

Neben der Verschiebung des Blendenbauteils relativ zur Emittereinheit mit der Detektoreinheit ist es auch möglich, die Emittereinheit und die Detektoreinheit an den sich verformenden oder an dem die Verformung aufnehmenden Bauteil des Kraftfahrzeugs anzuordnen und im Falle einer Bauteilverformung verschieben sich die Emitter- und die Detektoreinheit relativ zum Blendenbauteil.

In der Auswerteeinheit kann anhand der Änderungen der detektierten Beleuchtungsstärke ein Fortschritt der Verformungen des Fahrzeugbauteils, beispielsweise der Fahrzeugkarosserie, berechnet werden. Anhand der zeitlichen Änderungen der Beleuchtungsstärke kann weiterhin ein Rückschluss auf die Geschwindigkeit der Verformung des Fahrzeugbauteils berechnet werden.

Hierzu ist es notwendig, dass die Lichtstrahlen in einem konstanten Abstand zueinander angeordnet sind und die gleiche Intensität aufweisen. Weiterhin ist es wichtig, dass vor allem beim Einsatz mehrerer Detektoren Emittereinheit und Detektoreinheit zueinander parallel angeordnet sind. Dadurch wird erreicht, dass der Durchmesser des auftreffenden Lichtstrahls und somit die Intensitätsverteilung auf jedem Detektor gleich ist. Bei einer Verkippung der Emittereinheit gegenüber der Detektoreinheit variiert der Durchmesser des Lichtstrahls auf dem Detektor in Abhängigkeit zu seiner Länge. Dies kann dazu führen, dass das Licht und somit die eigentliche Beleuchtungsstärke nur teilweise vom Detektor aufgenommen wird und somit die zur Auswertung notwendigen abrupten Signaländerungen nicht mehr eindeutig detektierbar sind. Die abrupten Signaländerungen sind in der Funktion der detektierten Beleuchtungsstärke über der Zeit in Form steiler Flanken erkennbar. Das Unterbrechen einzelner Strahlengänge durch das Blendenbauteil verringert die Beleuchtungsstärke jeweils um einen konstanten Wert, wodurch die Flanken zwischen den verschiedenen Werten der Beleuchtungsstärke entstehen. Um möglichst steile Flanken zu erhalten, sollte der Durchmesser der Lichtstrahlen möglichst gering gehalten werden.

Durch die Abstände der Flanken kann die Deformationsgeschwindigkeit, durch die Anzahl der Flanken der Deformationsweg ermittelt werden.

Die von der Detektoreinheit aufgenommenen Signale werden dann an die Auswerteeinheit weitergeleitet. Die Signale werden von der Auswerteeinheit ausgewertet und als Eingangsparameter, beispielsweise an eine Steuereinheit, weitergeleitet, über welche dann entsprechende Sicherheitssysteme aktiviert werden können.

Die Auswerteeinheit kann als ein zentraler Knotenpunkt ausgeführt sein, an welchem die Signale von an verschiedenen Fahrzeugbauteilen angeordneten Sensoreinheiten zusammenlaufen. Die Auswertung der Signale aller Sensoreinheiten kann zentral in der Auswerteeinheit erfolgen. Ferner können alle Sensoreinheiten an einen zentralen Lichtemitter angeschlossen sein, der in oder an der Auswerteeinheit angebracht ist.

Für die ordnungsgemäße Funktionsweise des Sensors muss sichergestellt werden, dass das Rasterbauteil leicht gegenüber dem Emitterbauteil verschiebbar ist. Verklemmungen können beispielsweise durch Punktberührungen, oder linienförmige Berührungen zwischen Rasterbauteil und einer Führung des Emitterbauteils, vermieden werden. Es ist auch denkbar, dass begrenzt nachgiebige Materialien, insbesondere Kunststoffe, zum Einsatz kommen, um Verklemmungen zu vermeiden.

Ein wesentlicher Vorteil der Erfindung ist, dass das von der Auswerteeinheit empfangene optische Signal der Sensoreinheit direkt ausgewertet werden kann, ohne dass ein Herausfiltern von Störgrößen notwendig ist.

Die Sensoreinheiten können überall dort, wo es als notwendig erachtet wird, am und im Kraftfahrzeug angebracht sein. Dadurch kann das Kraftfahrzeug mit einer Art optischem Netz versehen werden, dessen Signale in der zentralen Auswerteeinheit zusammenlaufen. Die Reaktionszeit des Systems setzt sich zusammen aus der Rechenzeit und dem zeitlichen Abstand der Flanken. Die Zeit zwischen dem Beginn der Verformung und dem Vorliegen des errechneten Ergebnisses, welches zur verformungsangepassten Auslösung von beispielsweise Insassenschutzsystemen führt, kann im Bereich von 1 ms bis 2 ms liegen. Mit Zunahme der Verformungsgeschwindigkeit verkürzt sich die Reaktionszeit des Systems. Dadurch wird im Falle eines Unfalls ein maximaler Insassenschutz gewährleistet.

Die Erfindung wird anhand der nachfolgenden Zeichnungen näher beschrieben.

### Es zeigen:

- Figur 1: eine schematische Darstellung einer Ausführungsform einer Sensoreinheit;
- Figur 2: eine weitere Ausführungsform einer erfindungsgemäßen Sensoreinheit;
- Figur 3: einen beispielhaften Verlauf der Abnahme der Beleuchtungsstärke über der Zeit und
- Figur 4: eine schematische Darstellung eines erfindungsgemäßen Kraftfahrzeugs.

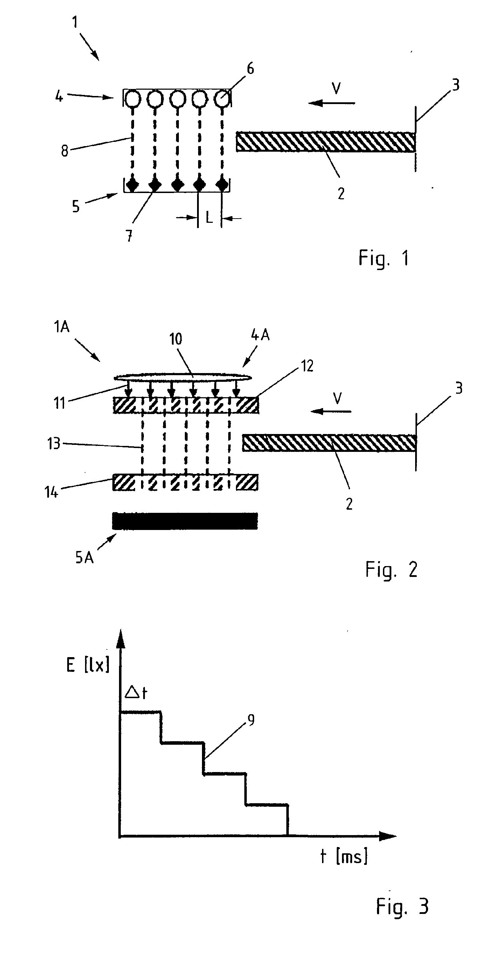

In Figur 1 ist schematisch eine Sensoreinheit 1 dargestellt, deren Blendenbauteil 2 an einem Fahrzeugbauteil 3, beispielsweise einem Karosseriebauteil, befestigt ist. Prinzipiell ist es ebenso möglich, auch die Auswerteeinheit an der Karosserie anzuordnen. Eine Emittereinheit 4 ist gegenüber liegend einer Detektoreinheit 5 angeordnet. In dieser Ausführungsform besteht die Emittereinheit 4 aus mehreren Emittern 6 und die Detektoreinheit 5 besteht aus mehreren Detektoren 7, so dass jeweils ein Lichtstrahl 8 von einem Emitter 6 auf einen Detektor 7 fällt. Bei einer Verformung V des Fahrzeugbauteils 3 wird das Blendenbauteil 2 zwischen der Emittereinheit 4 und der Detektoreinheit 5 verschoben. Dabei werden nacheinander die Strahlengänge der Lichtstrahlen 8 unterbrochen und es ergibt sich beispielsweise eine, wie in Figur 3 dargestellte, Funktion für die Abnahme der Beleuchtungsstärke E. Dies gilt, wenn die einzelnen Detektoren beispielsweise über Lichtwellenleiter verbunden werden. Dann werden alle Strahlengänge auf einen Punkt gebündelt. Die Beleuchtungsstärke E hängt dann von der Anzahl der nicht unterbrochenen Strahlengänge ab.

Denkbar ist aber auch, dass jeder Detektor einzeln arbeiten kann, ähnlich einem Phototransistor oder einer Diode, und eine Spannung freischaltet. Dann ist die Übertragung zur Steuereinheit elektrisch. Vorzugsweise werden aber Lichtwellenleiter zur Signalübertragung angedacht, welche letztendlich zu der beschriebenen Funktion an der Steuereinheit führen.

Durch jeden unterbrochenen Strahlengang entsteht in der Funktion eine steile Flanke 9 und in der Auswerteeinheit kann anhand der Anzahl der Flanken 9 der Fortschritt der Verformung V des Fahrzeugbauteils 3 detektiert werden und anhand des zeitlichen Abstands Δt der Flanken 9 kann die Geschwindigkeit der Verformung berechnet werden.

In Figur 2 ist ein weiteres Ausführungsbeispiel der erfindungsgemäßen Sensoreinheit 1 a dargestellt. Hierbei weist die Emittereinheit 4a eine zentrale Lichtquelle 10 auf, deren Lichtstrahl 11 auf eine Lochblende 12 trifft und durch die Lochblende 12 in mehrere einzelne Lichtstrahlen 13 aufgeteilt wird, die wiederum auf eine zentrale Detektoreinheit 5a auftreffen. Optional kann, wie in diesem Beispiel dargestellt, oberhalb der Detektoreinheit 5a eine weitere Blende 14 angeordnet sein. Auch hier ist das Blendenbauteil 2 wiederum an einem Fahrzeugbauteil 3 angeordnet und wird bei der Verformung V relativ zur Emittereinheit 4a und Detektoreinheit 5a verschoben.

Figur 3 zeigt ein Diagramm mit der Abnahme der Beleuchtungsstärke E in Abhängigkeit von der Zeit t. Die Funktion ist beispielhaft für eine gleichmäßige Verschiebung des Blendenbauteils gegenüber der Emitter- und Detektoreinheit und einer damit verbundenen, aufeinander folgenden Unterbrechung der einzelnen Strahlengänge.

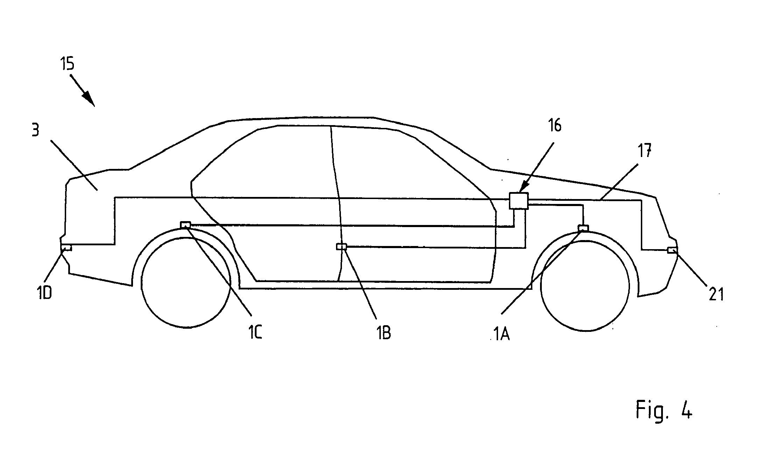

Figur 4 zeigt schematisch ein Kraftfahrzeug 15 mit einer Vorrichtung zur Detektion von Verformungen seiner Fahrzeugbauteile 3. Hierzu sind die Sensoreinheiten 1A, 1B, 1C, 1D an verschiedenen Bereichen der Fahrzeugbauteile, insbesondere der Karosserie, angeordnet. Alle Sensoreinheiten 1A, 1B, 1C, 1D sind mit einer zentralen Auswerteeinheit 16 verbunden. Dabei wird die detektierte Beleuchtungsstärke in Form eines Signals beispielsweise über Lichtleiter 17 an die Auswerteeinheit 16 weitergeleitet. Diese enthält gleichzeitig mit der Information über eine Verformung des Fahrzeugbauteils 3 auch die Information darüber, welche Sensoreinheit 1A, 1B, 1C, 1D das Signal sendet und damit über den Ort, an dem die Verformung auftritt. Demzufolge kann über diese zentrale Auswerteeinheit 16 auch die Aktivierung entsprechender Sicherheitssysteme erfolgen.

### Bezugszeichen:

- 1 -: Sensoreinheit
- 1A -: Sensoreinheit
- 1B -: Sensoreinheit
- 1C -: Sensoreinheit
- 1D -: Sensoreinheit
- 2 -: Blendenbauteil
- 3 -: Fahrzeubauteil
- 4 -: Emittereinheit
- 4A -: Emittereinheit
- 5 -: Detektoreinheit
- 5A -: Detektoreinheit
- 6 -: Emitter
- 7 -: Detektor
- 8 -: Lichtstrahl
- 9 -: Flanke
- 10 -: Lichtquelle
- 11 -: Lichtstrahl
- 12 -: Lochblende
- 13 -: Lichtstrahl
- 14 -: Blende
- 15 -: Kraftfahrzeug
- 16 -: Auswerteeinheit
- 17 -: Lichtleiter

- E -: Beleuchtungsstärke
- L -: Abstand
- V -: Verformung
- t -: Zeit

## Patentansprüche

1. Verfahren zur Detektion von Verformungen von Fahrzeugbauteilen, insbesondere Karosseriebauteilen, bei welchem eine Auswerteeinheit (16) Signale von mindestens einer Sensoreinheit (1, 1A, 1B, 1C, 1D) empfängt, wobei ein an einem Fahrzeugbauteil (3) angeordnetes Blendenbauteil (2) und eine Emittereinheit mit einer Detektoreinheit bei einer Verformung eines Fahrzeugbauteils (3) relativ zueinander verschoben werden, wobei Lichtstrahlen (8, 13), deren Strahlengänge von einer Emittereinheit (4, 4A) zu einer Detektoreinheit (5, 5A) verlaufen, durch das Blendenbauteil (2) unterbrochen oder freigegeben werden, wodurch eine Änderung einer von der Detektoreinheit (5, 5A) detektierten Beleuchtungsstärke (E) erfolgt, und wobei die Beleuchtungsstärke (E) in Form eines Signals von der Detektoreinheit (5, 5A) der Sensoreinheit (1, 1A, 1B, 1C, 1D) an die Auswerteeinheit (16) übertragen wird.

2. Verfahren nach Anspruch 1, **dadurch gekennzeichnet, dass** das zeitlich modulierte Signal in Form eines Lichtsignals an die Auswerteeinheit (16) übertragen wird.

3. Verfahren nach Anspruch 1 oder 2, **dadurch gekennzeichnet, dass** die Auswerteeinheit (16) das Signal einem bestimmten Fahrzeugbauteil (3) zuordnet.

4. Verfahren nach einem der Ansprüche 1 bis 3, **dadurch gekennzeichnet, dass** in der Auswerteeinheit (16) aus einer Änderung der Beleuchtungsstärke (E) ein Fortschritt der Verformung (V) des Fahrzeugbauteils (3) berechnet wird.

5. Verfahren nach einem der Ansprüche 1 bis 4, **dadurch gekennzeichnet, dass** in der Auswerteeinheit (16) aus einer zeitlichen Änderung der Beleuchtungsstärke (E) eine Geschwindigkeit der Verformung des Fahrzeugbauteils (3) berechnet wird.

6. Verfahren nach einem der Ansprüche 1 bis 5, **dadurch gekennzeichnet, dass** die in der Auswerteeinheit (16) ausgewerteten Signale der Sensoreinheit (1, 1A, 1B, 1C, 1D) als Eingangsparameter einer Steuereinheit zugeführt werden, mittels welcher Sicherheitssysteme aktivierbar sind.

7. Kraftfahrzeug mit wenigstens einer an eine Auswerteeinheit (16) angeschlossenen Sensoreinheit (1, 1A, 1B, 1C, 1D) zur Detektion von Verformungen eines Fahrzeugbauteils (3), **dadurch gekennzeichnet, dass** die Sensoreinheit (1, 1A, 1B, 1C, 1D) wenigstens eine Emittereinheit (4, 4A) und eine der Emittereinheit (4, 4A) gegenüberliegende Detektoreinheit (5, 5A) sowie ein Blendenbauteil (2) umfasst, wobei das Blendenbauteil (2) an einem Fahrzeugbauteil (3) angeordnet ist, und wobei das Blendenbauteil (2) und die Emittereinheit (4, 4A) mit der Detektoreinheit (5, 5A) relativ zueinander verschiebbar sind, wobei Strahlengänge von mehreren, von der Emittereinheit zur Detektoreinheit verlaufenden, Lichtstrahlen (8, 13) unterbrechbar sind und wobei die Detektoreinheit (5, 5A) mit der zentralen Auswerteeinheit (16) verbunden ist.

8. Kraftfahrzeug nach Anspruch 7, **dadurch gekennzeichnet, dass** die Lichtstrahlen (8) durch mehrere Emitter (6) der Emittereinheit (4) erzeugbar sind.

9. Kraftfahrzeug nach Anspruch 7, **dadurch gekennzeichnet, dass** der Emittereinheit (4A) eine Lochblende (12) zur Bildung von Lichtstrahlen (13) zugeordnet ist.

10. Kraftfahrzeug nach einem der Ansprüche 7 bis 9, **dadurch gekennzeichnet, dass** die Lichtstrahlen (8, 13) in einem konstanten Abstand (L) zueinander angeordnet sind.

11. Kraftfahrzeug nach einem der Ansprüche 7 bis 10, **dadurch gekennzeichnet, dass** die Lichtstrahlen (8, 13) die gleiche Intensität aufweisen.

12. Kraftfahrzeug nach einem der Ansprüche 7 bis 11, **dadurch gekennzeichnet, dass** die Detektoreinheit (5, 5A) und die Emittereinheit (4, 4A) zueinander parallel angeordnet sind.

13. Kraftfahrzeug nach einem der Ansprüche 7 bis 12, **dadurch gekennzeichnet, dass** die Detektoreinheit (5) aus Optokopplern besteht.

14. Kraftfahrzeug nach einem der Ansprüche 7 bis 13, **dadurch gekennzeichnet, dass** die Detektoreinheit (5) aus mehreren Detektoren (7) besteht.

15. Kraftfahrzeug nach Anspruch 7, **dadurch gekennzeichnet, dass** die Detektoreinheit als Charge-Coupled-Device-Sensor (CCD) ausgeführt ist.

16. Kraftfahrzeug nach einem der Ansprüche 7 bis 15, **dadurch gekennzeichnet, dass** die Detektoreinheit (5, 5A) über einen Lichtleiter (17) mit der zentralen Auswerteeinheit (16) verbunden ist.
